# EUROPÄISCHE PATENTSCHRIFT

(11) **EP 0 449 846 B1**
(45) Veröffentlichungstag und Bekanntmachung des Hinweises auf die Patenterteilung: **04.05.1994**
(21) Anmeldenummer: 89912897.9
(22) Anmeldetag: 17.11.1989
(51) Int. Cl.: G01N 27/416

(54) **SENSORELEMENT FÜR GRENZSTROMSENSOREN ZUR BESTIMMUNG DES LAMBDA-WERTES VON GASGEMISCHEN**
SENSOR ELEMENT FOR BOUNDARY FLOW SENSORS TO DETERMINE THE LAMBDA VALUE OF GAS MIXTURES
ELEMENT CAPTEUR POUR CAPTEURS DE COURANT LIMITE POUR LA DETERMINATION DE LA VALEUR LAMBDA DE MELANGES GAZEUX

(30) Priorität: 10.12.1988 DE 3841611
(43) Veröffentlichungstag der Anmeldung: 09.10.1991
(73) Patentinhaber: ROBERT BOSCH GMBH, 70442 Stuttgart (DE)
(72) Erfinder: DIETZ, Hermann, D-7016 Gerlingen (DE); GRÜNWALD, Werner, D-7016 Gerlingen (DE); DE LA PRIETA, Claudio, D-7000 Stuttgart 80 (DE)
(86) Internationale Anmeldenummer: DE8900731
(87) Internationale Veröffentlichungsnummer: WO9006506

(56) Entgegenhaltungen:
- EP-A- 0 020 938
- EP-A- 0 140 295
- EP-A- 0 152 942
- EP-A- 0 218 357
- EP-A- 0 259 175
- DE-C- 3 728 289
- DE-C- 3 728 618
- DE-C- 3 809 154
- FR-A- 2 499 720
- TRANSDUCERS '85 INTERNATIONAL CONFERENCE ON SOLID-STATE SENSORS AND ACTUATORS, 1985, IEEE, US; K.SAJI et al.: "Characteristics of limiting current-type oxygen sensor", Seiten 336-339

## Beschreibung

### Stand der Technik

Die Erfindung geht aus von einem Sensorelement für Grenzstromsensoren nach der Gattung des Anspruchs 1. Bei derartigen Sensorelementen, die nach dem Diffusionsgrenzstromprinzip arbeiten, wird der Diffusionsgrenzstrom im allgemeinen bei einer konstanten, an den beiden Elektroden des Sensorelementes anliegenden Spannung gemessen. Dieser Strom ist in einem bei Verbrennungsvorgängen entstehenden Abgas von der Sauerstoffkonzentration solange abhängig, wie die Diffusion des Gases zur Pumpelektrode die Geschwindigkeit der ablaufenden Elektroden-Reaktion bestimmt. Es ist bekannt, derartige, nach dem polarographischen Meßprinzip arbeitende Sensoren in der Weise aufzubauen, daß sowohl Anode als auch Kathode dem zu messenden Gas ausgesetzt sind, wobei die Kathode eine Diffusionsbarriere aufweist, um ein Arbeiten im Diffusionsgrenzstrombereich zu erzielen.

Die bekannten Grenzstromsensoren dienen in der Regel zur Bestimmung des λ-Wertes von Abgasgemischen, der das Verhältnis "Gesamtsauerstoff/zur vollständigen Verbrennung des Kraftstoffs benötigten Sauerstoff" des in einem Zylinder verbrennenden Luft:Kraftstoffgemisches bezeichnet.

Aufgrund einer vereinfachten und kostengünstigen Herstellungsweise hat sich in der Praxis in den letzten Jahren die Herstellung von in Keramikfolien- und in Siebdrucktechnik herstellbaren Sonden und Sensorelementen durchgesetzt.

In einfacher und rationeller Weise lassen sich planare polarographische Sonden ausgehend von plättchen- oder folienförmigen sauerstoffleitenden Festelektrolyten, z. B. aus stabilisiertem Zirkondioxid, herstellen, die beidseitig mit einer (inneren oder äußeren) Pumpelektrode und der dazugehörigen Leiterbahn beschichtet werden. Die innere Pumpelektrode befindet sich dabei in vorteilhafter Weise am Ende eines Diffusionsspaltes oder Diffusionskanals, durch den das Meßgas eindiffundieren kann, und der als Gasdiffusionswiderstand dient.

Aus der DE-OS 35 43 759 sowie den EP-A 0 142 992, 0 142 993, 0 188 900 und 0 194 082 sind ferner Sensorelemente und Detektoren bekannt, denen gemein ist, daß sie jeweils eine Pumpzelle und eine Sensorzelle aufweisen, die aus plättchen- oder folienförmigen sauerstoffleitenden Festelektrolyten und zwei hierauf angeordneten Elektroden bestehen und einen gemeinsamen Diffusionsspalt oder Diffusionskanal aufweisen.

In der DE-OS 38 34 987 wird ferner ein Sensorelement für Grenzstromsensoren zur Bestimmung des λ-Wertes von Gasgemischen, insbesondere den Abgasen von Verbrennungsmotoren mit auf einem O²⁻-Ionen leitenden Festelektrolyten angeordneten Pumpelektrodenpaar beschrieben, bei dem die innere Pumpelektrode über einen Diffusionsspalt Verbindung zum Meßgas hat und der Diffusionsspalt durch eine in Siebdrucktechnik erzeugte Festelektrolytschicht abgedeckt ist.

Aus der DE-C-3 728 289 ist eine nach dem polarographischen Meßprinzip arbeitende Grenzstromsonde bekannt, bei der vor der inneren Pumpelektrode ein Kanalsystem aus porös gefüllten Diffusionskanälen für eine Knudsendiffusion und hohlen Diffusionskanälen für eine Gasphasendiffusion angeordnet ist. Das Verhältnis von Knudsen- zu Gasphasendiffusion wird durch die Wahl des Kanalsystems bei der Herstellung festgelegt. Ein Eingriff nach dem Sintern ist nicht mehr möglich.

In Transducers '85, Intern.Conf. on Solid-State Sensors and Actuators, 1985, IEEE, Seiten 336 bis 339 wird die Charakteristik eines Grenzstromsensors mit einer über der Kathode angeordneten porösen Schicht untersucht, wobei die Diffusionsrate des Sauerstoffs durch die poröse Schicht begrenzt wird.

Nachteilig an den bekannten Sensorelementen, die insbesondere durch Zusammenlaminieren mehrerer Festelektrolytfolien, insbesondere durch Zusammenlaminieren von Folien auf Basis von stabilisiertem ZrO₂ hergestellt werden, ist, daß eine nachträgliche Veränderung der Geometrie der Diffusionsschicht, z. B. zum Zwecke der Kalibrierung der Sensorelemente bei fertig gesinterten Sensorelementen in der Regel schwierig ist. Tatsächlich hängt bei Grenzstromsonden die Größe des Diffusionsstromes von der Gestaltung der Diffusionsbarriere ab, die nach verschiedenen Methoden erzeugt werden kann. Bei Keramik-Sonden werden derartige Diffusionsbarrieren vorzugsweise nach dem Siebdruckverfahren auf ungesinterte Keramik-Substrate aufgebracht, worauf das Ganze gesintert wird. Erst dann kann der Grenzstrom gemessen werden.

Um diesen Nachteil auszuschalten, ist es bekannt, z. B. aus der EP-0 191 627, Sensorelemente mit abgleichbaren Widerständen auf dem Sensorkörper zu verwenden. Nachteilig hieran ist jedoch, daß die Herstellung eines solchen Sensorelementes vergleichsweise aufwendig und kostspielig ist und daß dafür zusätzliche elektrische Anschlüsse auf dem Sensorkörper benötigt werden.

### Vorteile der Erfindung

Das erfindungsgemäße Sensorelement mit den kennzeichnenden Merkmalen des Anspruchs 1 hat gegenüber dem aus der EP 0 191 627 bekannten Element den wesentlichen Vorteil, daß es einfacher herstellbar ist und daß weniger elektrische Anschlüsse benötigt werden. Im Falle eines erfindungsgemäßen Sensorelementes ist die Veränderung des Diffusionswiderstandes des fertigen Sensorelementes in weiten Grenzen möglich, indem die Eintrittsöffnung des Gases in die Diffusionsschicht mechanisch oder durch Laserschnitte sukzessive erweitert wird. Ergibt sich somit, daß der Diffusionswiderstand eines hergestellten Sensorelementes zu groß ist, um in einem günstigen Belastungsbereich arbeiten zu können, so wird ein Teil der Abgleichzone auf mechanischem Wege oder durch Laserschnitte abgetrennt.

Eine mechanische Abtrennung von Teilen der Abgleichzone erfolgt zweckmäßig in der Weise, daß man durch Sandstrahlen oder mittels einer keramischen Säge während der laufenden Messung den Grenzstrom auf einen definierten Wert einstellt, wobei durch die mechanische Bearbeitung die Tunneleingänge, z. B. die durch die Abgleichzone 8 der Diffusionsschicht 5 gebildeten Tunneleingänge gemäß Fig. 2, erweitert werden.

Bei der Abtrennung von Teilen der Abgleichzone durch Laserschnitte verfährt man in entsprechender Weise, indem man die Tunneleingänge durch Laserschnitte öffnet, bis ein definierter Grenzstrom fließt.

Die Geometrie der Diffusionsschicht wird den Gegebenheiten des Einzelfalles angepaßt. Dies bedeutet, daß die Diffusionsschicht sehr unterschiedliche Formen und Abmessungen haben kann.

Sie kann beispielsweise im Falle rechteckiger Elektroden diese geometrisch ähnlich überdecken oder im Falle runder Elektroden diese kreisförmig umschließen. Zahl, Länge und Abstand der Zacken voneinander werden vorzugsweise in Abhängigkeit von der verfügbaren Elektrodenfläche so ausgewählt, daß die Elektroden entsprechend der eindiffundierenden Gasmenge in einem günstigen Belastungsbereich arbeiten können.

Das erfindungsgemäße Sensorelement läßt sich anstelle bekannter Sensorelemente planarer Struktur in Grenzstromsensoren üblicher Bauart verwenden. In Frage kommen dabei Breitbandsensoren (λ 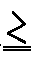 1) und Magersensoren (λ > 1). Das erfindungsgemäße Sensorelement kann somit allein als Pumpzelle, gegebenenfalls mit einem Heizelelement, ausgebildet sein, z. B. als Magersensor für Dieselmotoren, und als solches in ein übliches Sensorgehäuse, z. B. des aus den DE-OS 32 06 903 und 35 37 051 bekannten Typs eingebaut und zur Messung des Kraftstoff-Luft-Verhältnisses in einem mageren oder fetten Abgas verwendet werden. Das erfindungsgemäße Sensorelement kann jedoch auch außer der Pumpzelle zusätzlich noch eine Sensorzelle (Nernstzelle) aufweisen, die mit einem zusätzlichen Luftreferenzkanal versehen ist und deren eine Elektrode im Bereich der Pumpelektrode im Diffusionskanal der Pumpzelle angeordnet ist und deren andere Elektrode sich im Luftreferenzkanal befindet.

### Zeichnung

In der Zeichnung sind vorteilhafte Ausführungsformen eines erfindungsgemäßen Sensorelementes beispielsweise dargestellt. Im einzelnen sind dargestellt in:
- Fig. 1: eine erste Ausführungsform eines erfindungsgemäßen Sensorelementes im Schnitt, schematisch dargestellt;
- Fig. 2: die Form einer Diffusionsschicht in Aufsicht schematisch dargestellt und in
- Fig. 3: eine zweite Ausführungsform eines erfindungsgemäßen Sensorelementes im Schnitt, schematisch dargestellt.

### Beschreibung der Ausführungsbeispiele

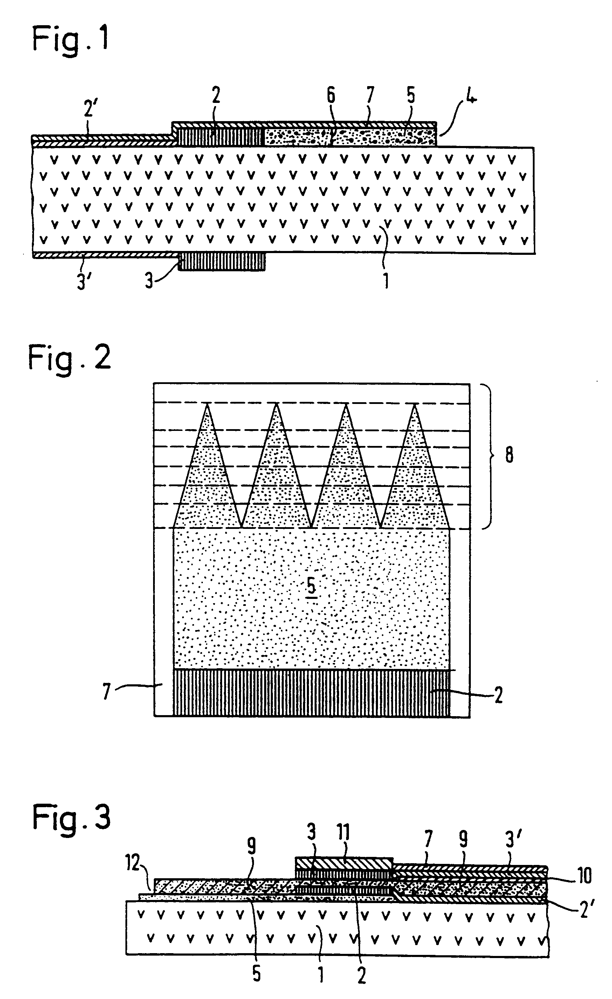

Das in Fig. 1 schematisch dargestellte Sensorelement besteht aus dem Keramikträger 1, auf den die innere Pumpelektrode (Kathode) 2 mit der Leiterbahn 2' und die äußere Pumpelektrode (Anode) 3 mit der Leiterbahn 3' aufgetragen sind. Der inneren Pumpelektrode 2 wird Meßgas über den Meßgaseintritt 4 und den mit der Diffusionsschicht 5 gefüllten Diffusionsspalt 6 zugeführt. Pumpelektrode 2, Leiterbahn 2' und Diffusionsschicht 5 sind mit der gasdichten Abdeckschicht 7 abgedeckt.

Fig. 2 veranschaulicht die geometrische Form der Diffusionsschicht 5 mit der zackenförmigen Abgleichzone 8. Die gestrichelten Linien deuten dabei Bereiche an, die beispielsweise abgetrennt werden können.

Das in Fig. 3 schematisch dargestellte Sensorelement besteht aus dem Keramikträger 1, der inneren Pumpelektrode 2 mit der dazugehörigen Leiterbahn 2', der Diffusionsschicht 5, der Festelektrolytschicht 9, der äußeren Pumpelektrode 3 mit dazugehöriger Leiterbahn 3', der Isolationschicht 10, der Engobe 11 und der Abdeckschicht 7. Der Meßgaseintritt erfolgt bei 12. Die Diffusionsschicht 5 kann wiederum eine geometrische Form aufweisen, wie sie in Fig. 2 beispielsweise dargestellt ist.

Die als Diffusionsbarrieren wirkenden porösen Diffusionsschichten 5 können nach dem Siebdruckverfahren ausgehend von üblichen Druckpasten auf den ungesinterten Keramikträger aufgedruckt werden. Es ist aber auch möglich, auf den ungesinterten Keramikträger Ausbrennschichten aufzudrucken und das Ganze später zu sintern. Auch können porös sinternde Folien entsprechender geometrischer Form zur Ausbildung der Diffusionsschicht verwendet werden.

In vorteilhafter Weise besteht die Diffusionsschicht 5 mit der Abgleichzone 8 aus einem grob porös sinternden keramischen Material, z. B. auf Al₂O₃- oder ZrO₂-Basis. Die Porosität der Diffusionsschicht kann dabei durch Zusatz von Porenbildnern eingestellt werden, die beim Sinterprozeß verbrennen, sich zersetzen oder verdampfen. Typische Porenbildner, die verwendet werden können, sind. z. B. Thermalrußpulver, Kunststoffe, z. B. auf Polyurethanbasis, Salze, z. B. Ammoniumcarbonat und organische Substanzen, wie z. B. Theobromin und Indanthrenblau. Derartige Porenbildner werden dem porös sinternden Ausgangsmaterial in einer solchen Menge zugesetzt, daß ein Material mit einer Porosität von z. B. 10 bis 50 % anfällt. Der mittlere Porendurchmesser, der durch die Teilchengröße des verwendeten Porenbildners bestimmt worden kann, liegt vorzugsweise bei etwa 0,1 bis 10 µm.

In vorteilhafter Weise kann die Diffusionsschicht 5 ferner derart ausgestaltet sein, daß sowohl eine Knudsen- als auch eine Gasphasendiffusion stattfindet. Dies bedeutet, daß die Diffusionsbarriere bildende Diffusionsschicht ein Kanalsystem für eine Mischdiffusion aus Knudsen- und Gasphasendiffusion aufweist, wie es näher in der DE-OS 37 28 289 beschrieben wird.

Der Keramikträger 1 besteht aus einem Keramikmaterial, wie es üblicherweise zur Herstellung von Sensorelementen verwendet wird, beispielsweise auf ZrO₂- oder Al₂O₃-Basis. Vorzugsweise besteht der Keramikträger 1 aus einem der bekannten, zur Herstellung von O²⁻-Ionen leitenden Festelektrolytfolien verwendeten Oxide vierwertiger Metalle, wie insbesondere ZrO₂, CeO₂, HfO₂ und ThO₂ mit einem Gehalt an zweiwertigen Erdalkalioxiden und/oder vorzugsweise dreiwertigen Oxiden der seltenen Erden. In typischer Weise kann die Schicht zu etwa 50 bis 97 Mol-% aus ZrO₂, CeO₂, HfO₂ oder ThO₂ und zu 50 bis 3 Mol-% aus CaO, MgO oder SrO und/oder Oxiden der seltenen Erden und insbesondere Y₂O₃ bestehen. Als vorteilhaft hat es sich erwiesen, zur Herstellung der Sensorelemente als Keramikträger Folien aus ungesintertem Keramikmaterial mit einer Schichtstärke von 0,3 bis 1,0 mm, insbesondere von etwa 0,5 mm zu verwenden.

Die Pumpelektroden 2 und 3 und die dazugehörigen Leiterbahnen 2' und 3' bestehen vorzugsweise aus einem Metall der Platingruppe, insbesondere Platin, oder aus Legierungen von Metallen der Platingruppe oder Legierungen von Metallen der Platingruppe mit anderen Metallen. Gegebenenfalls enthalten sie ein keramisches Stützgerüstmaterial, z. B. in Form eines YSZ-Pulvers, mit einem Volumenanteil von vorzugsweise etwa 40 Vol.-%. Sie sind porös und möglichst dünn. Vorzugsweise weisen sie eine Dicke von 8 bis 15 um auf. Die zu den Pumpelektroden gehörenden Leiterbahnen bestehen vorzugsweise ebenfalls aus Platin oder einer Platinlegierung des beschriebenen Typs. Sie können ferner ebenfalls ausgehend von einer Paste auf Edelmetall-Cermetbasis erzeugt werden.

Zum Aufdrucken der Pumpelektroden und Leiterbahnen geeignete Pasten können in bekannter Weise unter Verwendung von organischen Bindemitteln und/oder Haftverbesserern, Weichmachern und organischen Lösungsmitteln hergestellt werden. Sollen dabei gleichzeitig isolierende Zwischenschichten erzeugt werden, so können den Pasten geringere Mengen von Verbindungen mit einem 5-wertigen oder höherwertigen Kation zugesetzt werden, z. B. Nb₂O₅. Als haftverbessernde Zusätze eignen sich z. B. Al₂O₃ oder ZrO₂.

Die gasdichte Abdeckschicht 7 besteht beispielsweise aus einer Schicht auf Al₂O₃- oder Mg-Spinell-Basis, wie sie üblicherweise in planaren Sensorelementen zur Abdeckung von Elektroden verwendet wird.

Im Falle der in Fig. 3 beispielsweise dargestellten Ausführungsform eines erfindungsgemäßen Sensorelementes besteht die Festelektrolytschicht 9 aus einem der bekannten, zur Herstellung von O²⁻-Ionen leitenden Festelektrolytfolien verwendeten Oxide vierwertiger Metalle, wie insbesondere ZrO₂, CeO₂, HfO₂ und ThO₂ mit einem Gehalt an zweiwertigen Erdalkalioxiden und/oder vorzugsweise dreiwertigen Oxiden der seltenen Erden. In typischer Weise kann die Schicht zu etwa 50 bis 97 Mol-% aus ZrO₂, CeO₂, HfO₂ oder ThO₂ und zu 50 bis 3 Mol-% aus CaO, MgO oder SrO und/oder Oxiden der seltenen Erden und insbesondere Y₂O₃ bestehen. In vorteilhafter Weise besteht die Schicht aus mit Y₂O₃ stabilisiertem ZrO₂. Die Dicke der Schicht kann in vorteilhafter Weise bei 10 - 200 µm, insbesondere 15 bis 50 µm liegen.

Die zur Erzeugung der Festelektrolytschicht verwendeten Pasten können unter Verwendung von Bindemitteln und/oder Hafterverbesserern, Weichmachern und organischen Lösungshergestellt werden.

Die Isolationsschicht 10, die die Leiterbahn 3' der äußeren Pumpelektrode 3 gegenüber der Festelektrolytschicht 8 isoliert, besteht aus einer isolierenden Schicht, z. B. auf Al₂O₃-Basis, wie sie bei der Herstellung von planaren Sensorelementen üblicherweise erzeugt werden, um Leiterbahnen gegenüber einem Festelektrolyten zu isolieren. Die Isolationsschicht 10 kann beispielsweise 15 - 20 µm stark sein.

Gegebenenfalls kann eine derartige Isolationsschicht auch zwischen dem Träger 1 und der Leiterbahn 2' der inneren Pumpelektrode 2 angeordnet sein, z. B. in dem Fall, in dem der Träger ein Träger auf Festelektrolytbasis_{,} beispielsweise ein ZrO₂-Träger ist. Zwingend erforderlich ist die Anordnung derartiger Isolationsschichten jedoch nicht.

Die Engobe 11 ist porös und besteht beispielsweise aus einer Schicht auf Al₂O₃- oder Mg-Spinell-Basis, wie sie üblicherweise in planaren Sensorelementen zur Abdeckung von Elektroden verwendet wird. Die Stärke der Engobe liegt beispielsweise bei 10 - 40 µm.

Gemäß einer vorteilhaften Ausgestaltung der Erfindung besteht die poröse Engobe aus einer Al₂O₃- und/oder Mg-Spinell-Matrix mit darin eingelagerten ZrO₂-Partikeln des aus der DE-OS 37 37 215 bekannten Typs.

### Beispiel

Zur Herstellung eines Sensorelementes des in der Fig. 3 schematisch dargestellten Typs wurde als Träger eine Folie aus mit Yttrium stabilisiertem Zirkoniumdioxid einer Schichtstärke von 0,5 mm verwendet. Die Diffusionsschicht 5 mit der in Fig. 2 dargestellten geometrischen Form wurde in Dickschichttechnik durch eine Siebdruckschicht aus einem Gemisch aus Theobromin und grobkörnigem ZrO₂ mit einer Korngröße von 10 µm eingebracht, wobei das Theobromin beim späteren Sinterprozeß im Temperaturbereich um 300 ^{o}C verdampfte. Die ZrO₂-Festelektrolytschicht 9 wurde durch Aufdrucken einer Paste aus mit Y₂O₃-stabilisiertem ZrO₂ einer Teilchengröße von ∼ 1 - 2 µm erzeugt. Die aufgedruckte Schicht hatte eine Stärke von 80 µm Das Aufbringen der aus Platin bestehenden Pumpelektroden 2 und 3 erfolgte ebenfalls in bekannter Siebdrucktechnik, wobei auf die die äußere Pumpelektrode tragende Oberfläche der Festelektrolytschicht im Bereich der Leiterbahn der äußeren Pumpelektrode zuvor eine 10 µm dicke Al₂O₃-Isolationsschicht aufgetragen wurde. Die Pumpelektroden hatten eine Stärke von 12 µm. Die Leiterbahnen wurden ausgehend von einer üblichen Pt-Cermetpaste aus 85 Gew.-Teilen Pt-Pulver und 15 Gew.-Teilen YSZ-Pulver erzeugt.

Zur Erzeugung der Engobe 11 wurde eine Paste auf Al₂O₃-Basis aufgedruckt. Die Engobe hatte eine Stärke von ca. 30 µm.

Die Abdeckschicht 7 wurde ebenfalls ausgehend von einer Paste auf Al₂O₃-Basis aufgedruckt. Sie hatte eine Stärke von ca. 10 µm.

Nach Aufbringen der Elektroden, Leiterbahnen, Isolierschicht sowie Engobe und Abdeckschicht wurde der beschichtete Träger einem Sinterprozeß unterworfen, bei dem er etwa 3 Stunden lang auf eine Temperatur im Bereich von 1380^{o}C erhitzt wurde.

Das hergestellte Sensorelement wurde nach entsprechender Kalibrierung durch Abtrennen von Zackensegmenten in ein Gehäuse des aus der DE-OS 32 06 903 bekannten Typs eingesetzt und zur Bestimmung des λ-Wertes von Gasgemischen verwendet. Es wurden ausgezeichnet reproduzierbare Ergebnisse erhalten.

Vorzugsweise erfolgt die Herstellung eines erfindungsgemäßen Sensorelementes maschinell im Mehrfachnutzen. In vorteilhafter Weise liegt die Breite der Sonde bei etwa 4 bis 6 mm. Der Elektrodendurchmesser beträgt dabei in vorteilhafter Weise 3 bis 4 mm, z. B. 3,6 mm.

## Patentansprüche

1. Sensorelement für Grenzstromsensoren zur Bestimmung des λ-Wertes von Gasgemischen, insbesondere von Abgasen von Verbrennungsmotoren, mit auf einem Festelektrolytträger (1) angeordneten inneren und äußeren Pumpelektroden (2, 3), von denen die innere Pumpelektrode (2) für das durch eine als Diffusionsbarriere wirkende Diffusionsschicht (5) zugeführte Meßgas zugänglich ist, einer die Diffusionsschicht (5) bis auf eine Meßgaseintrittsöffnung (4) gegenüber dem Meßgas isolierenden gasdichten Abdeckschicht (7) sowie Leiterbahnen (2', 3') für die Pumpelektroden (2, 3), dadurch gekennzeichnet, daß zur Kalibrierung des Sensorelementes die Diffusionsschicht (5) im Bereich der Meßgaseintrittsöffnung (4) derart geformt ist, daß der Diffusionswiderstand der Diffusionsschicht (5) nach dem Sintern des Sensorelementes mechanisch oder durch Laserschnitte durch sukzessive Erweiterung der Meßgaseintrittsöffnung (4) abgleichbar ist.

2. Sensorelement nach Anspruch 1, dadurch gekennzeichnet, daß die der Meßgaseintrittsöffnung zugewandte Seite der Diffusionsschicht 5 zu einer zackenförmigen Abgleichzone 8 ausgebildet ist, von der unter Veränderung des Diffusionswiderstandes der Diffusionsschicht 5 Teile abtrennbar sind.

3. Sensorelement nach Anspruch 2, dadurch gekennzeichnet, daß in der zackenförmigen Abgleichzone 8 Anzahl, Länge und Abstand der Zacken voneinander derart gewählt werden, daß die innere Pumpelektrode entsprechend der eindiffundierenden Meßgasmenge in einem günstigen Belastungsbereich arbeiten kann.

4. Sensorelement nach einem der Ansprüche 1 und 2, dadurch gekennzeichnet, daß die Diffusionsschicht 5 aus einer porösen Schicht auf Al₂O₃- oder ZrO₂-Basis besteht.

5. Sensorelement nach einem der Ansprüche 1 bis 3, dadurch gekennzeichnet, daß die Diffusionsschicht 5 nach dem Siebdruckverfahren auf einem Festelektrolytträger 1 aufgedruckt worden ist.

6. Sensorelement nach einem der Ansprüche 1 bis 5, dadurch gekennzeichnet, daß die gasdichte Abdeckschicht 7 über der Diffusionsschicht 5 aus einer in Siebdrucktechnik erstellten Festelektrolytschicht besteht.

7. Sensorelement nach einem der Ansprüche 1 bis 6, dadurch gekennzeichnet, daß der Festelektrolytträger 1 aus mit Y₂O₃ stabilisiertem ZrO₂ besteht.

## Claims

1. Sensor element for limiting-current sensors for determining the λ value of gas mixtures, especially of exhaust gases from internal-combustion engines, which sensor element contains inner and outer pumping electrodes (2, 3) arranged on a solid-electrolyte support (1), the inner pumping electrode (2) being accessible to the sampled gas, which is supplied through a diffusion layer (5) acting as a diffusion barrier, and further contains a gas-tight covering layer (7) which insulates the diffusion layer (5) from the sampled gas, apart from a sampled-gas inlet orifice (4), and conductor tracks (2', 3') for the pumping electrodes (2, 3), characterized in that for the purpose of calibrating the sensor element the diffusion layer (5) is shaped in such a way in the vicinity of the sampled-gas inlet orifice (4), that the diffusion resistance of the diffusion layer (5) after sintering of the sensor element can be adjusted, mechanically or by laser cutting, by successive enlargement of the sampled-gas inlet orifice (4).

2. Sensor element according to Claim 1, characterized in that that side of the diffusion layer 5 which faces the sampled-gas inlet orifice is fashioned as a crenellated adjustment region 8, from which parts can be removed, with a change in diffusion resistance of the diffusion layer 5.

3. Sensor element according to Claim 2, characterized in that in the crenellated adjustment region 8, the number, the length and the spacing of the crenellations are chosen in such a way that the inner pumping electrode can operate in a suitable load range corresponding to the amount of sampled gas diffusing in.

4. Sensor element according to either Claim 1 or 2, characterized in that the diffusion layer 5 consists of a porous layer on the basis of Al₂O₃ or ZrO₂.

5. Sensor element according to any one of Claims 1 to 3, characterized in that the diffusion layer 5 has been printed on a solid-electrolyte support 1 according to the screen-printing process.

6. Sensor element according to any one of Claims 1 to 5, characterized in that the gas-tight covering layer 7 over the diffusion layer 5 consists of a solid-electrolyte layer produced by a screen-printing technique.

7. Sensor element according to any one of Claims 1 to 6, characterized in that the solid-electrolyte support 1 consists of ZrO₂ stabilized with Y₂O₃.

## Revendications

1. Elément capteur pour des capteurs de courant limite pour la détermination de la valeur lambda de mélanges gazeux, notamment de gaz d'échappement de moteurs à combustion interne, avec des électrodes de pompage interne et externe (2, 3) disposées sur un support en électrolyte solide (1), l'électrode de pompage interne (2) étant accessible pour le gaz de mesure alimenté par une couche de diffusion (5) jouant le rôle de barrière de diffusion, avec une couche de recouvrement (7) étanche aux gaz isolant la couche de diffusion (5) vis à vis du gaz de mesure à l'exception d'une ouverture d'entrée (4) de ce gaz de mesure, ainsi qu'avec des pistes conductrices (2', 3') pour les électrodes de pompage (2, 3), caractérisé en ce que pour le calibrage de cet élément capteur, la couche de diffusion (5) est formée dans la zone de l'ouverture d'entrée (4) du gaz de mesure de façon que la résistance de diffusion de la couche de diffusion (5) soit susceptible d'être ajustée mécaniquement ou par découpes au laser après le frittage de l'élément capteur, par élargissements successifs de l'ouverture d'entrée (4) du gaz de mesure.

2. Elément capteur selon la revendication 1, caractérisé en ce que le côté de la couche de diffusion (5) tourné vers l'ouverture d'entrée du gaz de mesure est réalisé en une zone d'ajustement (8) en forme de dents, dont des parties sont susceptibles d'être enlevées pour modifier la résistance de diffusion de la couche de diffusion (5).

3. Elément capteur selon la revendication 2, caractérisé en ce que dans la zone d'ajustement (8) en forme de dents, le nombre, la longueur et la distance des dents les unes autres sont choisis de façon que l'électrode de pompage interne puisse fonctionner, en fonction de la quantité de gaz de mesure diffusée, dans une zone de charge favorable.

4. Elément capteur selon une des revendications 1 et 2, caractérisé en ce que la couche de diffusion (5) est constituée d'une couche poreuse à base de Al₂O₃ ou bien de ZrO₂.

5. Elément capteur selon une des revendications 1 à 3, caractérisé en ce que la couche de diffusion a été appliquée sur un support d'électrolyte solide (1) selon le procédé de sérigraphie.

6. Elément capteur selon une des revendications 1 à 5, caractérisé en ce que la couche de recouvrement (7) étanche aux gaz sur la couche de diffusion (5) est constituée d'une couche d'électrolyte solide produite selon la technique sérigraphique.

7. Elément capteur selon une des revendications 1 à 6, caractérisé en ce que le support (1) en électrolyte solide est constitué de ZrO₂ stabilisé par Y₂O₃.
